(19) Europäisches Patentamt
European Patent Office
Office européen des brevets

(11) **EP 4 589 251 A1**

(12) **EUROPEAN PATENT APPLICATION**
published in accordance with Art. 153(4) EPC

(43) Date of publication:
**23.07.2025 Bulletin 2025/30**

(21) Application number: **23865117.8**

(22) Date of filing: **02.08.2023**

(51) International Patent Classification (IPC):
**G01C 15/00** (2006.01)  **E02F 9/20** (2006.01)

(52) Cooperative Patent Classification (CPC):
**E02F 9/20; G01C 15/00**

(86) International application number:
**PCT/JP2023/028348**

(87) International publication number:
**WO 2024/057757 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.09.2022 JP 2022147113**

(71) Applicant: **TOPCON CORPORATION**
**Tokyo 174-8580 (JP)**

(72) Inventors:
• **SASAKI, Takeshi**
  **Tokyo 174-8580 (JP)**
• **FUKAYA, Nobuyuki**
  **Tokyo 174-8580 (JP)**
• **MISHIMA, Masahito**
  **Tokyo 174-8580 (JP)**

(74) Representative: **Schmitt-Nilson Schraud Waibel
Wohlfrom
Patentanwälte Partnerschaft mbB
Pelkovenstraße 143
80992 München (DE)**

(54) **COMPUTING DEVICE, COMPUTING METHOD, AND PROGRAM**

(57) Three-dimensional information can be obtained from the viewpoint of heavy equipment. Position of reflecting prism 102 for heavy equipment 100 on which camera 101 and the reflecting prism 102 are installed is tracked and positioned by total station 200 of which external orientation parameters in a specific coordinate system are known so as to obtain positioning data, image data of multiple photographed images of which an overlapping range is photographed from mutually different multiple positions by the camera 101 are obtained, relationship of relative position between multiple feature points p1, p2, p3 extracted from the multiple photographed images and the mutually different multiple positions of the camera 101 is calculated, trajectory of travel of the camera 101 with respect to the multiple feature points p1, p2, p3 based on change of the relationship of relative position is calculated, positions of the multiple feature points p1, p2, p3 in the specific coordinate system based on comparison between the calculated trajectory of travel of the camera 101 and the positioning data are calculated.

Fig. 2

**Description**

Technical Field

The present invention relates to a technique in which three-dimensional data is obtained from heavy equipment.

Background Art

A technique is known in which position of a piece of heavy equipment is measured by using a surveying apparatus (For example, see Patent Document 1).

Patent Document 1 is Japanese Unexamined Patent Application Publication No. Heisei 08 (1996)-43093.

Summary of Invention

In order to collect data of results of work that a piece of heavy equipment performed in one day or in a certain period, conventionally, after the work performed by the heavy equipment, three-dimensional information on the object of the work has been again obtained by using a surveying device such as a laser scanner which is arranged at a worksite. Since the work by the heavy equipment and the collection of data of the work results are separately performed in this method, efficiency is low, and improvement is desired. Furthermore, the above-mentioned work should be performed by a person having special knowledge, and high efficiency is desired from this viewpoint. Under such circumstances, an object of the present invention is to promote efficiency regarding collecting data of work results of operation of heavy equipment.

The present invention is an operating device including: a measurement data receiving unit which receives measurement data of which a measuring device, of which the position and orientation in a specific coordinate system are known, tracks and measures positions of a reflecting prism for heavy equipment on which camera and the reflecting prism are installed; an image data obtaining unit which obtains image data of multiple photographed images which are photographed by the camera from mutually different multiple positions during travel of the heavy equipment; and an operating unit which calculates a relationship of relative position between multiple feature points common in the multiple photographed images and the mutually different multiple positions of the camera, and which specifies position of the multiple feature points in the specific coordinate system based on comparison between the mutually different multiple positions of the camera and the measurement data. In the present invention, an aspect may be mentioned in which adjustment calculation of position of the multiple feature points in the specific coordinate system is performed by using a relationship of a position between the camera and the reflecting prism.

In the present invention, an aspect may be mentioned in which the operating unit produces a first 3D data at a previous step on a time axis and produces a second 3D data in a later step on a time axis based on the multiple feature points, and performs processing calculating differences between the second 3D data and the first 3D data.

In the present invention, an aspect may be mentioned in which the operating device further includes a work content specifying unit which specifies content of work which is performed by the heavy equipment, based on the differences between the second 3D data and the first 3D data. In the present invention, an aspect may be mentioned in which the operating device further includes an object of surveillance detecting unit which detects an object which moves toward the heavy equipment on the ground as an object of surveillance, based on the differences between the second 3D data and the first 3D data.

In the present invention, an aspect may be mentioned in which the operating device further includes an alerting unit which performs alerting processing in a case in which the object of surveillance approaches the heavy equipment within a predetermined distance. In the present invention, an aspect may be mentioned in which a part of the heavy equipment shows up in the multiple photographed images, and the device further includes an eliminating unit which eliminates an image of a part of the heavy equipment which shows up in multiple photographed images or a 3D data corresponding to the image.

In the present invention, an aspect may be mentioned in which a laser scanner is installed on the heavy equipment, relationship of position and orientation between the laser scanner and the camera is known, the laser scanner obtains laser scan point cloud during operation of the heavy equipment, position and orientation of the camera in the specific coordinate system is calculated by the adjustment calculation, and the device further comprises an operating unit which calculates position and orientation of the laser scanner in the specific coordinate system based on the position and the orientation of the camera in the specific coordinate system, and executes coordinate transformation of the laser scan point cloud into the specific coordinate system based on the position and the orientation of the laser scanner in the specific coordinate system.

The present invention is an operating method including steps of: receiving measurement data of which a measuring device, of which the position and orientation in a specific coordinate system are known, tracks and measures positions of a reflecting prism for heavy equipment on which a camera and the reflecting prism are installed; obtaining image data of multiple photographed images which are photographed by the camera from mutually different multiple positions during travel of the heavy equipment, calculating the relationship of relative positions between multiple feature points common in the multiple photographed images and the mutually different multiple positions of the camera, and specifying the positions of the multiple feature points in the specific coordinate system based on comparison between the mutually different multiple positions of the camera and the measurement data.

The present invention is a program made to, when read and executed by a computer processor, cause the computer processor to: receive measurement data of which a measuring device, of which the external orientation parameters in a specific coordinate system are known, tracks and measures positions of a reflecting prism for heavy equipment on which a camera and the reflecting prism are installed; obtain image data of multiple photographed images which are photographed by the camera from mutually different multiple positions during travelling of the heavy equipment; calculate relationships of relative positions between multiple feature points common in the multiple photographed images and the mutually different multiple positions of the camera; and specify positions of the multiple feature points in the specific coordinate system based on comparison between the mutually different multiple positions of the camera and the measurement data.

The present invention is an operating device including: a measurement data receiving unit which receives measurement data of which positions of heavy equipment, on which a camera and a GNSS position measuring device are installed, is measured by the GNSS device, an image data obtaining unit which obtains image data of multiple photographed images which are photographed by the camera from mutually different multiple positions during travel of the heavy equipment, and an operating unit which calculates relationships of relative positions between multiple feature points common in the multiple photographed images and the mutually different multiple positions of the camera, and which specifies positions of the multiple feature points based on comparison between the mutually different multiple positions of the camera and the measurement data.

Effects of Invention

According to the present invention, efficiency can be improved of operations for collecting data of the results of work performed by heavy equipment.

Brief Description of Drawings

Fig. 1 is a conceptual diagram of an Embodiment.
Fig. 2 is a diagram showing principles for obtaining three-dimensional information.
Fig. 3 is a diagram showing a process of earthwork by heavy equipment.
Fig. 4 is a diagram showing changes in ground form occurring as a result of earthwork by heavy equipment.
Fig. 5 is a block diagram of an operating device.
Fig. 6 is a flowchart diagram showing one example of steps of processing.
Fig. 7 is a flowchart diagram showing one example of steps of processing.
Fig. 8 is a diagram showing the relationships of positions of feature points, display positions of feature points, and camera positions.

Embodiments of Invention

1. First Embodiment

(Summary)

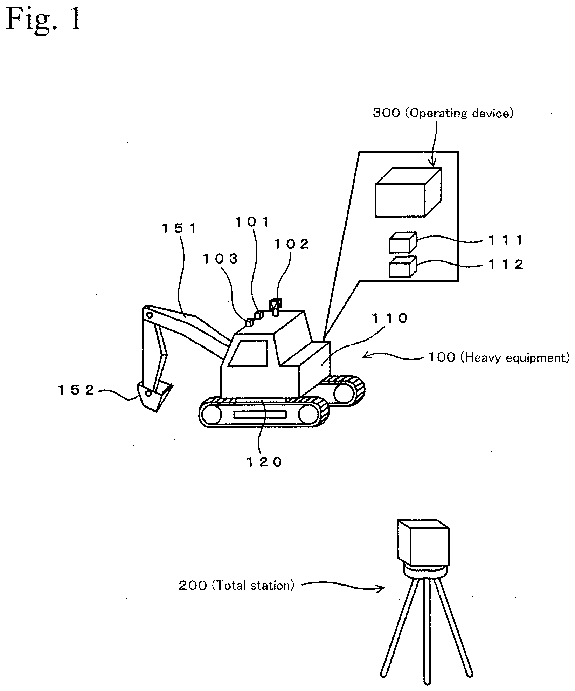

Fig. 1 shows a piece of heavy equipment 100 performing earthwork and a total station 200 performing measurement of locations of the heavy equipment 100. The heavy equipment 100 photographs using a camera 101 which is installed together with performing the work, and 3D data around the heavy equipment 100 is obtained by a principle of SfM (Structure from Motion). During this, the total station 200 continuously and repeatedly measures the position of a reflecting prism 102 which is installed in the heavy equipment 100 while tracking the reflecting prism 102. Based on measurement value of the position of the reflecting prism 102, the above-mentioned 3D data is obtained as data in a specific coordinate system. The principal of SfM is disclosed in Japanese Unexamined Patent Application Publication No. 2013-186816, for example.

(Heavy equipment)

The heavy equipment 100 is a power shovel. The power shovel is one example, and the kind of heavy equipment is not particularly limited as long as it is a piece of heavy equipment performing earthwork. The heavy equipment 100 includes a base unit 120 which travels on the ground by caterpillar tracks, and a rotating unit 110 which rotates horizontally on the base unit 120. The rotating unit 110 includes a driving compartment and an arm 151. A bucket 152 is arranged on top of the arm 151. These structures are the same as those of a typical power shovel.

The camera 101, the reflecting prism 102, and a laser scanner 103 are arranged on an upper part of the rotating unit 110. Relationship of position of the camera 101 and position of the reflecting prism 102 may be unknown. The relationship of position of the camera 101 and position of the reflecting prism 102 is calculated as an unknown amount during adjustment calculation. It should be noted that the relationship of position of the camera 101 and position of the reflecting prism 102 can be preliminarily obtained as known information.

The camera 101 is a digital still camera which photographs still images continuously and repeatedly. The camera 101 photographs around the heavy equipment 100. A depth camera can be employed as a camera 101. An embodiment is possible in which a camera for recording a moving image is used as a camera 101 and a frame image constructing the movie is used as a still image. Fig. 1 shows an example in which one camera 101 is arranged on the heavy equipment 100; however, multiple cameras facing multiple directions can be arranged. Furthermore, a stereo camera can be used.

The reflecting prism 102 is an optical reflection target which is used in surveying using laser light. Here, an all-circumference reflecting prism is used as reflecting prism 102. The reflecting prism 102 reflects incident light changing the direction by 180 degrees. As an optical reflection target, other than the reflecting prism, a reflection target having retroreflection properties may be used.

Position of the reflecting prism 102 can be freely selected. It should be noted that influence of rotation of the rotating unit 110 can be reduced during measuring the position of the reflecting prism 102 by the total station 200 if the reflecting prism 102 is arranged at a rotation center or near the rotation center of the rotating unit 110.

The heavy equipment 100 includes a travel detecting unit 111, a rotation detecting unit 112 and an operating unit 300. It should be noted that explanations are omitted, and the heavy equipment 100 includes other functions necessary for operating the power shovel.

The travel detecting unit 111 detects whether or not the base unit 120 travels on caterpillar tracks. When the heavy equipment 100 travels, the travel detecting unit 111 outputs a signal which indicates that the heavy equipment 100 is now traveling (the base unit 120 is travelling on caterpillar tracks). According to this signal, the heavy equipment 100 can be determined as to whether or not it is traveling (running). When the rotating unit 110 rotates, the rotation detecting unit 112 outputs a signal which indicates that the rotating unit 110 is now rotating. According to this signal, the rotating unit 110 can be determined as to whether or not it is rotating. The operating unit 300 is explained later.

Position of the heavy equipment 100 can be understood by position of the center of gravity of the heavy equipment. Position of the heavy equipment 100 can be understood by a position of the camera 101 or the reflecting prism 102, a position of a point somewhere on the rotation center axis of the rotating unit 110, or a position of a point somewhere on the heavy equipment 100.

(Total station)

The total station 200 is an example of a surveying apparatus which can measure position. The total station 200 includes a function of positioning using laser light, a camera, a clock, a storing unit of survey data, a communication interface, a user interface, a function of searching for an object of survey (reflecting prism 102), and a function of tracking the object of survey even if it travels. Commonly available kinds of total station can be used as the total station 200.

Before processing, position and orientation of the total station 200 in a specific coordinate system are obtained, and they are regarded as known data. A coordinate system used is the absolute coordinate system or a local coordinate system. The absolute coordinate system is a coordinate system which is used in maps or GNSS. The coordinate system which is selected here is a coordinate system which describes the 3D data obtained. It should be noted that position of the total station 200 is understood by position of the optical origin point of an optical system for performing ranging.

The heavy equipment 100 begins work under conditions in which the total station 200 collimates and locks the reflecting prism 102. During the work by the heavy equipment 100, the total station 200 measures position of the reflecting prism 102 repeatedly while tracking it. Gaps between measurements of position of the reflecting prism 102 performed repeatedly is set to be about 0.5 seconds to 5 seconds.

(Principle)

According to the following principle, 3D data of photographing an object is made based on images photographed by the camera 101 installed on the heavy equipment 100.

(1) Mutual orientation

A relative three-dimensional model at a freely chosen scale is made based on the photographed image photographed by the camera 101, and a relative relationship is specified between feature points which are specified among multiple images and position and orientation of the camera 101 at time of photographing of each image.

(2) Absolute orientation

Using position data in a specific coordinate system of the reflecting prism 102 which is measured by the total station 200, a scale (actual value) is given to the relative three-dimensional model which is made in the above-mentioned "(1) Mutual orientation", so that external orientation parameters (position and orientation) of the camera 101 in the coordinate system and position in the coordinate system of each feature point used in the location are calculated.

(3) Adjustment calculation

A bundle adjustment calculation and an adjustment calculation in which position relationship of the reflecting prism 102 and the camera 101 are considered are performed simultaneously, so that the external orientation parameters of the camera 101 and position of the feature points in the specific coordinate system used are optimized. According to this, point cloud data in which position of the feature point in the coordinate system is described can be obtained.

(4) Making three-dimensional model

Based on the point cloud data which is optimized by the above-mentioned adjustment calculation, a three-dimensional model of an object is made. As a three-dimensional model, one in which outline of an object is converted into data, DEM (Digital Elevation Model), TIN (Triangulated Irregular Network) or the like can be mentioned. Regarding making of a three-dimensional model based on point cloud data, is disclosed in WO2011/070927 publication, Japanese Unexamined Patent Applications Publication Nos. 2012-230594 and 2014-35702, for example.

(Details of each processing)

(Details of mutual orientation)

In order to facilitate explanation of the invention, hereinafter a mutual orientation using two images (hereinafter stereo images) which are photographed from different positions and which show an overlapping object, is explained. The heavy equipment 100 continuously photographs forward from the rotating unit 110 by the camera 101 while traveling, so as to obtain many photographed images. Here, two photographed images which are close on a time axis and which are photographed from positions mutually different and having overlapping photographing ranges, are selected as stereo images. Since the heavy equipment 100 repeatedly takes photographs while traveling, the above stereo images are two photographed images of which viewpoints are different and in which an overlapping object is shown.

It should be noted that photographed images which the camera 101 photographs while the heavy equipment 100 is at a stop, and photographed images which the camera 101 photographs while the rotating unit 110 rotates are also included in image data. There may be a case in which a location in which the photographed images photographed by the camera 101 during the rotating unit 110 rotates may have large error, and the error may be ultimately reduced by adjustment calculation.

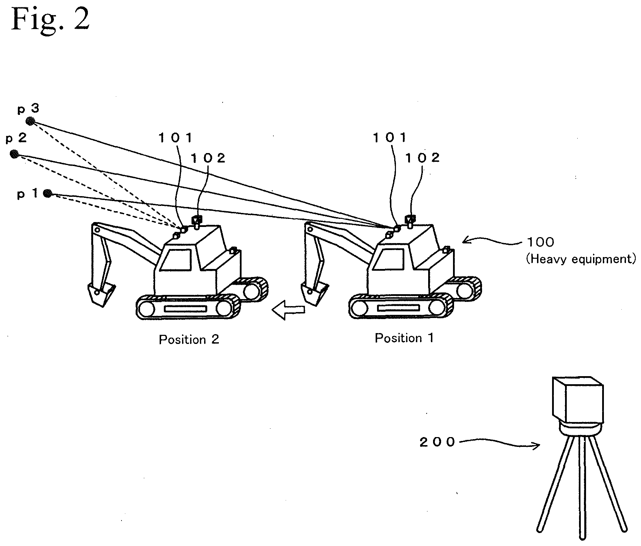

Fig. 2 shows a case in which the heavy equipment 100 travels from a position 1 to a position 2, and the camera 101 photographs overlapping ranges at the position 1 and position 2.

Fig. 2 shows a case in which a photographed image 1 photographed by the camera 101 at a timing when the heavy equipment 101 is positioned at the position 1 and a photographed image 2 photographed by the camera 101 at a timing when the heavy equipment 101 is positioned at the position 2 are made into stereo images and feature points p1, p2, and p3 are extracted from both images. It should be noted that a feature point can be obtained numerously; here, the case of three points is shown as an example to facilitate understanding.

In this case, the feature points are extracted from each of the photographed image 1 and the photographed image 2, and furthermore, corresponding relationships of feature points in the photographed image 1 and the photographed image 2 are specified. This technique is disclosed in Japanese Unexamined Patent Application Publication No. 2013-186816, for example. It should be noted that the Publication discloses in detail about extraction of feature points, matching of feature points between two images, an intersection method, types of locations, calculation of three-dimensional position of feature points, bundle adjustment and the like.

By specifying corresponding relationships between the photographed image 1 and the photographed image 2, the feature points p1, p2, p3 which are the same in both images are specified.

In the mutual orientation, in order to compensate for gaps between the feature points p1, p2, p3 in the photographed image 1 of the camera 101 at the position 1 and those in the photographed image 2 of the camera 101 at the position 2, positions and orientations of the camera 101 at both positions are searched (adjusted), and then, relative position relationship of relative external orientation parameters (position and orientation) of the camera 101 at both positions and the feature points p1, p2, p3 can be calculated. It should be noted that position of the camera 101 is a position of an optical projection center (viewpoint of the photographed image).

In this step, coordinate value and orientation value in a specific coordinate system are not given, and external orientation parameters calculated are relative position relationships and relative orientations (direction) relationships of the camera 101 in the position 1 and the position 2. Furthermore, positions of the feature points p1, p2, p3 are also relative positions (relative position relationships in which scale is not given) with respect to positions of camera 101 at the position 1 and the position 2.

If explaining in a case of Fig. 2, a shape of a triangle (degrees of three angles) in which three points of position of the camera 101 at the position 1 - position of the feature points $p_j$ (j=1, 2, 3) - position of the camera 101 at the position 2 are vertexes, can be calculated by the mutual orientation. In addition, the shape of a triangle (degrees of three angles) in which three points of position of the camera 101 at the position 1 or the position 2 - feature points $p_j$ (j=1, 2, 3) - feature points $p_k$ (k=1, 2, 3, k not= j) are vertexes, can be calculated. It should be noted that since no actual scale is given, the size of the triangle cannot be determined, and the triangle is a relative diagram (relative three-dimensional model). Furthermore, a coordinate system to describe the triangle is not specified.

The mutual orientation is used with respect to all the available images photographed by the camera 101, relationships between relative external orientation parameters of the camera 101 at each viewpoint position corresponding to each image, and relative position of each of the feature points is obtained. In the above explanation, the example of a mutual orientation is explained in which two images are used as stereo images; however, actually, the mutual orientation is performed using three or more images in which overlapping objects are shown.

(Detail of absolute orientation)

If positions in a specific coordinate system of the multiple feature points are obvious in Fig. 2, an actual scale and coordinate value are given to the relative three-dimensional model calculated by the mutual orientation according to Fig. 2, and coordinate position and orientation (direction) in the coordinate system of the camera 101 at the position 1 and the position 2 are specified. Furthermore, positions of each feature point in the coordinate system are also specified. This is the principle of the absolute orientation which is conventionally performed using a target for location.

In this embodiment, the absolute orientation is performed by giving actual scale and coordinate values to the relative three-dimensional model obtained by the mutual orientation, not using a target for location. Hereinafter, this is explained in detail.

Here, the position of the camera 101 in the above-mentioned relative three-dimensional model (triangle having three vertexes of position of the camera 101 at the position 1 - feature points $p_j$ (j=1, 2, 3) - position of the camera 101 at the position 2) obtained by the mutual orientation is focused on.

Positions of the reflecting prism 102 at the position 1 and the position 2 of the heavy equipment 100 are measured by the total station 200. Here, the camera 101 and the reflecting prism 102 are arranged close to each other, and the positional relationship thereof on the rotating unit 110 is known.

Then, regarding position of the reflecting prism 102 as the position of the camera 101, scale size of the above-mentioned relative three-dimensional model is adjusted, the relative three-dimensional model is moved parallel (adjustment of position) and the relative three-dimensional model is rotated (adjustment of direction), so that a traveling trajectory of the camera 101 in the relative three-dimensional model obtained by the mutual orientation fits to a traveling trajectory of the reflecting prism 102 in the specific coordinate system positioned by the total station 200.

By fitting the traveling trajectory of the camera 202 in the relative three-dimensional model to position data of the reflecting prism 102 measured by the total station 200, position of the camera 101 at multiple points in the relative three-dimensional model is determined and the feature point $p_j$ can be described in a specific coordinate system.

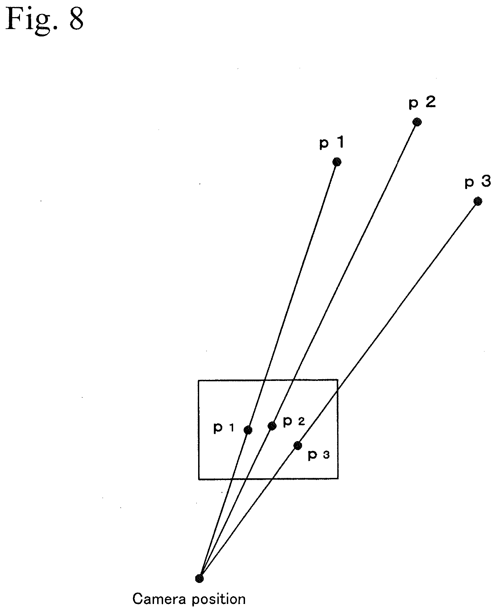

Fig. 8 shows position $p_1$ (two-dimensional coordinate position) of point p1, position $p_2$ of point p2, and position $p_3$ of point p3 in a photographed display photographed by the camera 101. In this case, if direction line connecting p1 and $p_1$, direction line connecting p2 and $p_2$, and direction line connecting p3 and $p_3$ are set, positions of points $p_1$, $p_2$ and $p_3$ in the photographed display are determined, and a direction of display center viewed from the camera position (projection center of the camera 101) corresponds to direction of an optical axis of the camera 101. In this way, orientation of the camera can be calculated.

For example, in a case in which position and orientation of the total station 200 in the absolute coordinate system are preliminarily determined, the above-mentioned absolute orientation is performed by using the absolute coordinate system, and positions of each point in the absolute coordinate system are described. Then, aggregation of points for which positions are described in the specific coordinate system corresponds to point cloud data.

(Detail of adjustment calculation)

The position of each feature point and the position and orientation of the camera 101 which are obtained in the above-mentioned absolute orientation include error. This error results from various factors. Furthermore, there is also an error due to vibration or the like of the heavy equipment 101.

Then, an adjustment calculation is performed to reduce error caused by regarding position of the camera 101 as position of the reflecting prism 102, and error due to other factors. In this adjustment calculation, observation equations indicated by Formulae 1 and 2 are made, and each parameter (the feature points $(X_j, Y_j, Z_j)$ and the external orientation parameters $(X_{0i}, Y_{0i}, Z_{0i}, a_{11i}$ to $a_{33i}$ (rotation matrix))) is optimized by the least-squares method.

Formula 1

$$\sum_{i=1}^{m}\sum_{j=1}^{n}\left\{-c\frac{a_{11i}(X_j-X_{0i})+a_{12i}(Y_j-Y_{0i})+a_{13i}(Z_j-Z_{0i})}{a_{31i}(X_j-X_{0i})+a_{32i}(Y_j-Y_{0i})+a_{33i}(Z_j-Z_{0i})}-x_{ij}\right\}^2$$

$$\sum_{i=1}^{m}\sum_{j=1}^{n}\left\{-c\frac{a_{21i}(X_j-X_{0i})+a_{22i}(Y_j-Y_{0i})+a_{21i}(Z_j-Z_{0i})}{a_{31i}(X_j-X_{0i})+a_{32i}(Y_j-Y_{0i})+a_{33i}(Z_j-Z_{0i})}-y_{ij}\right\}^2$$

c: Display distance (focal point distance)
$(X_j, Y_j, Z_j)$: Three-dimensional coordinates of feature point which is focused
$(x_{ij}, y_{ij})$: Coordinates on image (on display) of point j on the image i
$(X_{0i}, Y_{0i}, Z_{0i})$: Position of the camera 101 when photographing a photograph i
$(a_{11i}$ to $a_{33i})$: Rotation matrix which indicates orientation of the camera 101 when photographing a photograph i

Formula 2

$$\sum_{i=1}^{m}\left\{X_{0i}-\left(X_{pi}+a_{11i}L_X+a_{12i}L_Y+a_{13i}L_Z\right)\right\}^2$$

$$\sum_{i=1}^{m}\left\{Y_{0i}-\left(Y_{pi}+a_{21i}L_X+a_{22i}L_Y+a_{23i}L_Z\right)\right\}^2$$

$$\sum_{i=1}^{m}\left\{Z_{0i}-\left(Z_{pi}+a_{31i}L_X+a_{32i}L_Y+a_{33i}L_Z\right)\right\}^2$$

$(X_{pi}, Y_{pi}, Z_{pi})$: Position of the reflecting prism 102 at a time photographing an image i
$(L_X, L_Y, L_Z)$: Separated distance between position (projection center) of the camera 101 and reflection point of the reflecting prism 102

In the above Formula 1, as an initial value of $(X_j, Y_j, Z_j)$, the three-dimensional coordinate of the feature point in the three-dimensional model which is obtained in the above-mentioned absolute orientation is used. As an initial value of $(X_{0i}, Y_{0i}, Z_{0i})$, position of the camera 101 in the three-dimensional model which is obtained in the absolute orientation is used. As an initial value of $(a_{11i}$ to $a_{33i})$, a value is used of a rotation matrix which indicates orientation of the camera 101 in the three-dimensional model which is obtained at the absolute orientation. As $(X_{pi}, Y_{pi}, Z_{pi})$, the position of the reflecting prism 102 which the total station 200 measures is used.

Formula 1 is an observation equation for performing bundle adjustment calculation. In the bundle adjustment calculation, based on a collinear condition in which light flux (bundle) connecting three points of feature points of an object of measurement, a point on an image and a point on the projection center should be on the same line, the observation equation of Formula 1 is made for each one of the light fluxes of each image, and coordinate $(X_j, Y_j, Z_j)$ of the feature point and parameter $(X_{0i}, Y_{0i}, Z_{0i}, a_{11i}$ to $a_{33i})$ of the external orientation parameters are simultaneously adjusted by the least-squares method.

Formula 2 is an observation equation for performing adjustment calculation which takes gaps in positions of the camera 101 and the reflecting prism 102 into consideration. $(L_X, L_Y, L_Z)$ is a parameter for determining position relationship of the camera 101 and the reflecting prism 102.

As an initial value of $(L_X, L_Y, L_Z)$, a value is used in a case in which orientation of the rotating unit 110 in a coordinate system used is a specific orientation.

For example, in a case in which forward direction of the rotating unit 110 is set as positive direction of an X axis, separation distance in the horizontal direction of the camera 101 and the reflecting prism 102 is defined as $L_H=$. Then, $L_X=L_H$, $L_Y=0$, and $L_Z$ : a known separated distance along the vertical direction, are employed as the initial values.

In the adjustment calculation using Formulae 1 and 2, the feature point $(X_j, Y_j, Z_j)$, the external orientation parameters $(X_{0i}, Y_{0i}, Z_{0i}, a_{11i}$ to $a_{33i}$ (rotation matrix indicating orientation)) and $(L_X, L_Y, L_Z)$ are used as parameters, and residual errors of Formulae 1 and 2 are calculated. In this case, combination of $(X_j, Y_j, Z_j)$, $(X_{0i}, Y_{0i}, Z_{0i}, a_{11i}$ to $a_{33i})$, $(L_X, L_Y, L_Z)$ in which the residual errors converge is searched for by the least-squares method.

Practically, in order to reduce the residual error shown by Formulae 1 and 2, calculation is repeated in which an amended amount is added to each parameter $(X_j, Y_j, Z_j)$, $(X_{0i}, Y_{0i}, Z_{0i}, a_{11i}$ to $a_{33i})$, $(L_X, L_Y, L_Z)$ and then Formulae 1 and 2 are simultaneously calculated. Then, combination of unknown parameters $(X_j, Y_j, Z_j)$, $(X_{0i}, Y_{0i}, Z_{0i}, a_{11i}$ to $a_{33i})$, $(L_X, L_Y, L_Z)$ in which Formulae 1 and 2 satisfy convergence conditions, is calculated. As the convergence condition, a condition is employed in which residual error is sufficiently small and changes of residual error compared to previous calculation is sufficiently small (conditions in which changes of calculation result converges).

It should be noted that in order to suppress generation of error by influence of vibration of the heavy equipment 100 during traveling, it is effective that vibration be detected by a sensor, and in a case in which there is a vibration greater than a permitted value, an image obtained in the timing is not used, or an operation is performed reducing influence of the image.

For example, with respect to a certain feature point, camera position, and camera orientation, the above-mentioned adjustment calculation is preferentially performed regarding data obtained under conditions in which vibration is not greater than the permitted value. On the other hand, priority (weighting) of adjustment calculation result of data obtained under conditions in which vibration is greater than the permitted value is reduced. For example, even if residual error and width of changes of residual error during adjustment calculation regarding data obtained during vibration are not permitted values, result of adjustment calculation regarding data obtained during non-vibration is preferentially employed if the non-vibration value is a permitted value. Feature points, camera positions, and camera orientations obtained during rotation of the rotating unit 110 can be handled similarly.

(Operating unit)

The operating unit 300 performs operation regarding making 3D data based on images photographed by the camera 101 or other operations. The operating unit 300 is a computer, which includes a CPU, a storing device, and various types of interfaces.

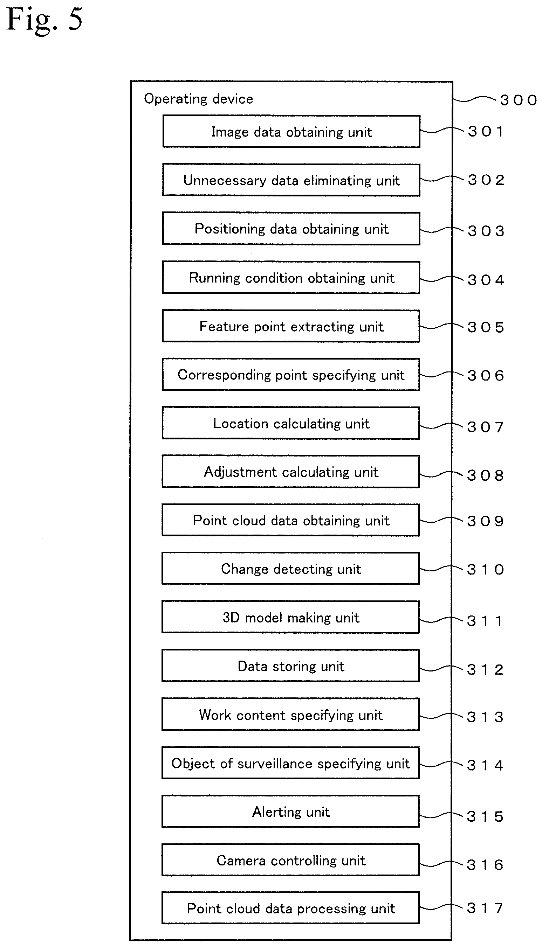

Fig. 5 shows a block diagram of the operating unit 300. The operating unit 300 includes an image data obtaining unit 301, an unnecessary data eliminating unit 302, a positioning data obtaining unit 303, a running condition obtaining unit 304, a feature point extracting unit 305, a corresponding point specifying unit 306, a location calculating unit 307, an adjustment calculating unit 308, a point cloud data obtaining unit 309, a change detecting unit 310, a 3D model making unit 311, a data storing unit 312, a work content specifying unit 313, an object of surveillance specifying unit 314, an alerting unit 315, a camera controlling unit 316, and a point cloud data processing unit 317.

Some or all of these functional units are realized by executing action programs by the CPU of the operating unit 300. Some or all of these functional units can be constructed of special hardware (electrical circuits).

The image data obtaining unit 301 obtains image data which is obtained by camara 101 which takes photographs. The unnecessary data eliminating unit 302 eliminates image or 3D data of a portion unnecessary for making 3D data of an object of work such as the arm 151 or the bucket 152 of the heavy equipment 100. The arm 151 or the bucket 152 of the heavy equipment 100 shows up in a photographed image by the camera 101. Since these images are unnecessary for making 3D data of an object of work, corresponding image data or 3D data is eliminated.

First, a case in which corresponding image data is eliminated is explained. In this case, correspondence relationships among photographed images that are mutually close on a time axis are specified, and image data regarding an object which travels in a certain direction with respect to background or which exists in a certain region in a display is eliminated.

For example, the arm shows up in a certain region in a photographed display, and position thereof in the display does not change even if the background moves. Using this phenomenon, the image of the arm is eliminated.

In a case in which the corresponding 3D data is eliminated, correspondence relationship among 3D data mutually close on a time axis is specified, and image data regarding an object which travels in a certain direction with respect to background or which exists in a certain three-dimensional region is eliminated.

For example, the arm exists in a certain three-dimensional region with respect to the camera 101, and moves with respect to background (for example, ground form). A point cloud showing this behavior is specified as the point cloud of the arm and is eliminated.

The positioning data obtaining unit 303 obtains position data of the reflecting prism 102 which is measured by the total station 200. The total station 200 includes a clock, and it obtains the time during measuring the position of the reflecting prism 102. The position data of the above-mentioned reflecting prism 102 is output from the total station 200 under conditions in which the data is related to the measuring time, and it is obtained by the positioning data obtaining unit 303.

The running condition obtaining unit 304 obtains information regarding whether the heavy equipment 100 travels or not, and whether the rotating unit 110 rotates or not. Here, whether or not the heavy equipment 100 travels is determined by a signal from the travel detecting unit 111, and whether or not the rotating unit 110 rotates is determined by a signal from the rotation detecting unit 112.

The feature point extracting unit 305 extracts feature points from a photographed image taken by the camera 101. The corresponding point specifying unit 306 specifies the correspondence relationship among multiple photographed images photographed by the camera 101. The multiple photographed images which are targeted here are photographed images which have overlapping photographed ranges. The correspondence relationship is specified within the overlapping ranges. As a method for specifying the correspondence relationship, template matching may be mentioned, for example.

The location calculating unit 307 calculates regarding a location which is explained in the paragraph regarding the principle. The adjustment calculating unit 308 performs processing regarding the adjustment calculation which is explained in the paragraph regarding the principle. The point cloud data obtaining unit 309 obtains data of feature points which are optimized by the adjustment calculation and for which coordinates are determined as point cloud data.

The change detecting unit 310 compares earlier 3D data and later 3D data along the time axis, and detects change in 3D data by calculating the differences.

The 3D model making unit 311 makes 3D models based on point cloud data. The data storing unit 312 stores kinds of data and action programs used in the operating unit 300, and kinds of data (for example, 3D data such as point cloud data) obtained by the operating unit 300.

The work content specifying unit 313 specifies content of work which the heavy equipment 100 performed, based on point cloud data or a 3D model based on the point cloud data which are obtained by the point cloud data obtaining unit 309. In this case, 3D data (point cloud data or a 3D model) of an object of surveillance such as a person mentioned below is eliminated since that data is not part of the work content.

Practically, a 3D data based on a photographed image which is obtained at a step before a specific work, and a 3D data based on a photographed image which is obtained in a step after the specific work, are compared, and differences in data thereof are calculated. This process is performed in the change detecting unit 310. Next, in the above difference data, 3D data of an object which travels on the ground and moves relative to the heavy equipment 100 is eliminated. In this way, change in 3D data which is generated by work of the heavy equipment 100 is detected, and content of such work (such as excavating ground) is specified.

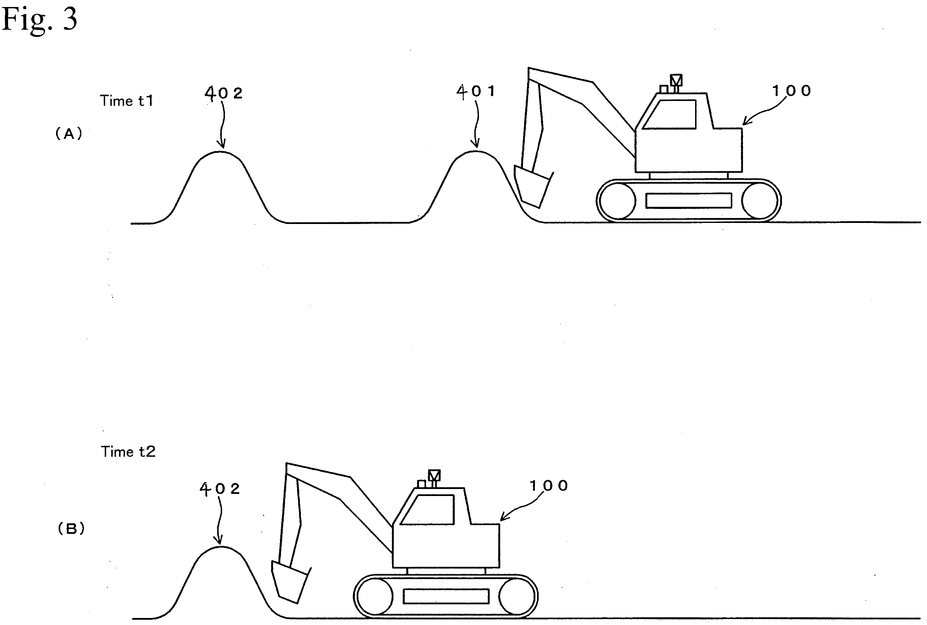

Hereinafter, a practical example is explained. A shape of the ground may change by earthwork of the heavy equipment 100. Fig. 3(A) shows a situation of a site of earthwork at time t1, and Fig. 3(B) shows a situation of the site of earthwork at time t2. Here, t2 is a time after t1.

Fig. 3(A) (time t1) shows a situation in which mounds 401 and 402 of the ground form exist. Fig. 3(B) (time t2) shows a situation in which the mound 401 of the ground form is removed by the heavy equipment 100 so as to flatten the ground and the mound 402 of the ground form remains after the situation at time t1 of Fig. 3(A).

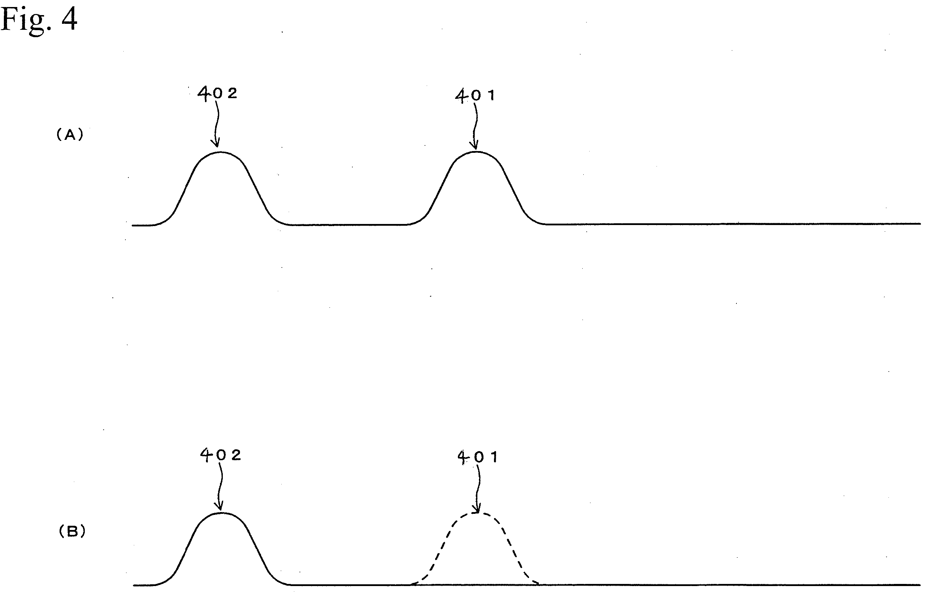

In a case in which the ground form is focused on, as shown in Fig. 4(B), the mound 401 of the ground form shown in Fig. 4(A) is eliminated by the work of the heavy equipment 100. Here, if the 3D data of the ground form in the situation of Fig. 3(A) or Fig. 4(A) and the 3D data of the ground form in the situation of Fig. 3(B) or Fig. 4(B) are focused on, there is a difference in 3D data corresponding to the mound of the ground form 401 between them. It should be noted that the 3D data mentioned here means the point cloud data or the 3D model (three-dimensional model) based on the point cloud data.

If explaining in the above example, 3D data of the mound 401 of the ground form which is an object to be eliminated can be extracted by calculating differences between the 3D data of the ground form in the situation of Fig. 4(B) and the 3D data of the ground form in the situation of Fig. 4(A).

The total station 200 includes a clock, and it obtains data of positioning time of the reflecting prism 102 used in the absolute orientation. Therefore, the obtaining time of basic data which is a base during absolute orientation is obvious, and a time related to 3D data obtained is obvious.

It should be noted that since the camera 101 photographs continuously, obtaining time of the point cloud data obtained has a time width to an extent, and it is not a point on a time axis. Therefore, time associated with 3D data obtained has a time width to some extent, and the width can be understood by an intermediate value or representative value thereof, for example.

For example, the 3D data may be updated every 10 seconds or every 30 seconds. During this updating, newly added 3D data and deleted 3D data (for example, 3D data of the above mound of the ground form 401 is one example) are extracted, and they can be stored separately. It should be noted that the cycle of updating can be appropriately set according to ability, necessary resolution on the time axis or the like of hardware used.

For example, it is assumed that the point cloud data is updated every 30 seconds. In this case, if point cloud data at a certain time is focused on, by extracting point cloud data of differences from point cloud data 30 seconds before, newly added point cloud data and deleted cloud data can be obtained. For example, an example of the deleted cloud data is the point cloud data "mound 401 of the ground form" which is finally eliminated as shown in Fig. 4.

For example, 3D data at each of time T1, time T2, Time T3 are generated. In this case, 3D data at each time is stored in relation to its time. This data is stored in the data storing unit 312.

By tracking changes along a time axis of 3D data at each time above, change in 3D data can be understood. For example, change in ground shape due to earthwork of the heavy equipment 100 can be understood by changing in 3D data. For example, change in ground shape due to earthwork of the heavy equipment 100 can be displayed as an image on a display as change over time of a 3D model. Furthermore, earth and sand which are excavated or banked can be understood as 3D data.

Objects which may change are not limited to the ground form, and they can be buildings or objects subjected to work. For example, in a case in which a building or an object subjected to work is broken by heavy equipment, the transition can be obtained as 3D data by applying the present embodiment.

The object of surveillance specifying unit 314 specifies an object which travels relative to the heavy equipment 100 on the ground, in particular, an object which approaches the heavy equipment 100 on the ground, as an object of surveillance.

By updating 3D data at regular intervals, processing can be realized in which approach or contact of the heavy equipment 100 and a person, and approach or contact of a piece of heavy equipment 100 and another piece of heavy equipment can be avoided.

For example, a case in which a person approaches the heavy equipment 100 is assumed. Here, 3D data is assumed to be updated every 5 seconds. In this case, by surveilling transition of change of 3D data every 5 seconds, approaching a piece of heavy equipment 100 can be detected as an object of surveillance.

Here, changes in 3D data obtained is surveilled, and 3D data which travels relative to background 3D data (ground form 3D data) and travels relative to the heavy equipment 100 is detected as an object of surveillance. Furthermore, by detecting whether or not the object of surveillance is a person by image recognition processing, a situation in which a person approaches the heavy equipment 100 can be understood. It should be noted that the processing regarding specification of an object of surveillance should be performed in real time or with as short a delay as possible.

The alerting unit 315 alerts regarding the object of surveillance which the object of surveillance specifying unit 314 specifies. For example, alerting processing is performed in a case in which distance between heavy equipment 100 and an object of surveillance such as a person or the like is less than a predetermined distance. Alerting is performed by a method of emitting a sound such as alerting sound to an operator of the heavy equipment 100 or to the surroundings, an alerting display using a display arranged in a cab of the heavy equipment 100, or a method outputting the alert signal to an external device such as a smartphone.

The camera controlling unit 316 controls photographing action of the camera 101. A construction is also possible in which the camera controlling unit 316 includes a clock function, and image data of an image photographed by the camera 101 is managed relative to time. A construction is also possible in which the camera 101 includes a clock function and data of photographing time and image data are associated.

The point cloud data processing unit performs processing regarding data of laser scan point cloud data which is obtained by the laser scanner 103. Details of the processing are explained below in the Fifth Embodiment.

(Example of steps of processing: No. 1)

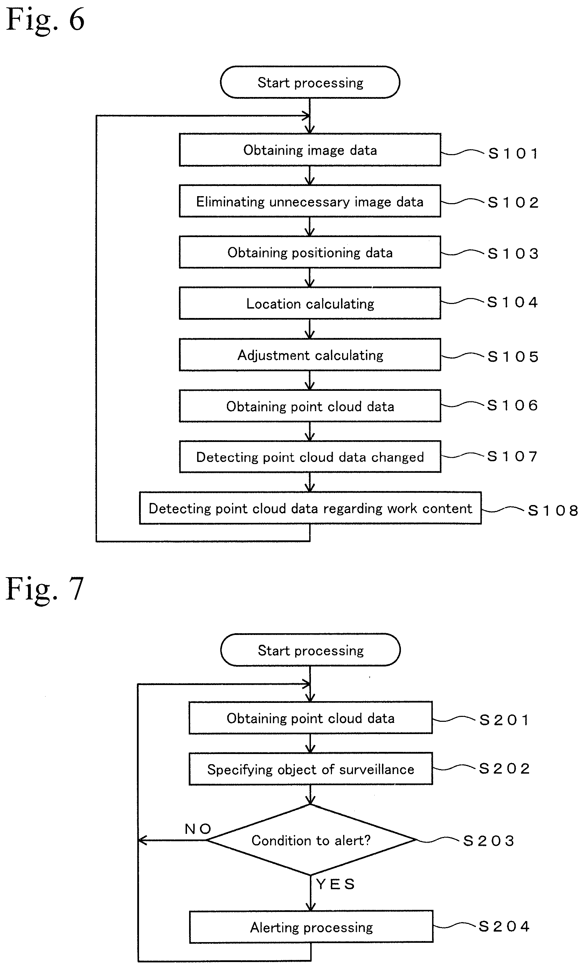

Fig. 6 shows one example of steps of processing. Program executing the process of Fig. 6 is stored in the data storing unit 312 or other appropriate storing device, is read out therefrom, and this is then executed by the CPU of a computer of the operating unit 300. A construction is also possible in which the program is stored in a server connected to the internet and is downloaded therefrom. Processing in Fig. 7 is the same.

Processing in Fig. 6 can be performed simultaneously with operation of the heavy equipment 100, or can be performed as post-processing after work by the heavy equipment 100 is completed.

First, image data of a photographed image which the camera 101 photographed is obtained (Step S101). In a case in which processing is performed simultaneously with operation of the heavy equipment 100 (simultaneously with photographing by the camera 101), image data is obtained in a range in which location calculation and adjustment calculation of a later step can be performed. In a case in which the location calculation and adjustment calculation are performed in post-processing, all of the image data obtained can be obtained. Of course, image data obtained can be divided into multiple and processed by a sequential processing.

Next, in an image of the image data obtained, image data of unnecessary parts are eliminated (Step S102). Here, the image data of unnecessary parts corresponds to an image data of a part unnecessary for collecting 3D data of an object of work such as the arm 151, bucket 152 and the like of the heavy equipment 100. This processing is performed in the unnecessary part eliminating unit 302.

Next, position data of the reflecting prism 102 measured by the total station 200 is obtained (Step S103). Next, the location calculation is performed based on the photographed image (Step S104). The location calculation is performed by the relative orientation and the absolute orientation explained in the paragraph regarding the principle. In the absolute orientation, positioning data of the reflecting prism 102 obtained in the step S103 is used. This processing is performed in the location calculating unit 307.

Next, the adjustment calculations shown in Formulae 1 and 2 are performed (Step S105). This processing is performed in the adjustment calculating unit 308.

Next, aggregation of each feature point which is optimized by the adjustment calculation is obtained as point cloud data (Step S106). It should be noted that the processing of Step S106 is not always necessary. In this case, the processing of Step S107 and thereafter are performed at another timing.

Next, two point cloud data of earlier and later along the time axis are compared, differences thereof are obtained, and point cloud data which changed over time is detected (Step S107). This processing is performed in the change detecting unit 310.

Next, among point cloud data in which change is detected, point cloud data regarding an object traveling on the ground is eliminated, and point cloud data which is changed by work of the heavy equipment 100 is detected as point cloud data regarding work content (Step S108). This processing is performed in the work content specifying unit 313.

(Example of steps of processing: No. 2)

Fig. 7 shows a flow chart diagram of an example of steps of processing to prevent the heavy equipment 100 and a person or the like from being interfered with. It is necessary to perform this processing as soon as possible without delay after photographing by the camera 101. First, processing of Steps S101 to S106 in Fig. 6 are performed, and point cloud data of object photographed by the camera 101 are obtained (Step S201).

Next, an object which moves relative to the heavy equipment 101 and the background ground form is specified as an object of surveillance (Step S202). This processing is performed in the object of surveillance specifying unit 314. Next, distance between the heavy equipment 100 and the object of surveillance is calculated, and determination is performed as to whether the distance is within a predetermined distance or not (Step S203).

In a case in which the distance is within the predetermined distance, alerting processing is performed (Step S204), and in a case in which the distance is greater than the predetermined distance, processing in Step S201 and processing thereafter are repeated.

(Superiority)

In the present embodiment, position of the reflecting prism 102 of the heavy equipment 100 on which the camera 101 and the reflecting prism 102 are installed is positioned while tracking by the total station 200 for which external orientation parameters in a specific coordinate system is known so that positioning data is obtained, the image data of multiple photographed images which are photographed by the camera 101 from different multiple positions and which include overlapping ranges are obtained, relationships of relative positions between the multiple feature points p1, p2, p3 extracted from the multiple photographed images and the multiple different positions of the camera 101 are calculated, trajectory of travel of the camera 101 with respect to the multiple feature points p1, p2, p3 based on change of relationships of relative positions are calculated, and position in the specific coordinate system of the multiple feature points p1, p2, p3 based on comparison of the calculated trajectory of travel of the camera 101 and the positioning data is calculated.

According to the present embodiment, data of result of work by the heavy equipment 100 can be obtained while the heavy equipment 100 is performing work. Therefore, three-dimensional information regarding work performed by the heavy equipment 100 can be obtained efficiently. In addition, risk of interference between the heavy equipment and a worker or the like can be detected.

2. Second Embodiment

The camera 101 does not always need time information in the First Embodiment, but it is better if the camera has information of photographing time. In this case, a photographed image is managed associating with its photographing time.

3. Third Embodiment

A construction is also possible in which function of the operating unit 300 is executed by using a data processing server. In this case, kinds of measurement data are sent from the heavy equipment 100 and the total station 200 to the data processing server via appropriate data communication lines such as an internet line, and processing performed in the operating unit 300 is executed therein.

4. Fifth Embodiment

Laser scan point cloud obtained by the laser scanner (LiDAR) 103 (hereinafter the second point cloud data) can be made consistent with the point cloud data based on the photographed images by the camera 101 explained in the First Embodiment (hereinafter the first point cloud data).

The laser scan point cloud obtained by the laser scanner 103 (the first point cloud data) is described as data of direction and distance, in a local coordinate system having an origin point of position of the laser scanner 103 (strictly speaking, optical origin point of an optical system of the laser scanner 103). In order to perform coordinate transformation from the first point cloud data to a specific coordinate system, it is sufficient for position and orientation (that is, external orientation parameters) of the laser scanner 103 in the specific coordinate system to be obvious.

In a case in which the laser scanner 103 performs laser scanning while traveling, strictly speaking, position of the origin point (viewpoint) of each one point is different (of course, there may be a case in which they can be regarded as the same origin point). Here, with respect to each point, if position and orientation of the laser scanner 103 in a coordinate system used are obvious, position of each point in the coordinate system can be obtained. In this way, the second point cloud data can be described in the same coordinate system of the first point cloud data, and thus, both can be made consistent.

Hereinafter, a method is explained in which position and orientation of the laser scanner 103 regarding points obtained by the laser scanner 103 are calculated.

Here, as an assumption, the relationship of position and orientation of the camera 101 and the laser scanner 103 are known. In addition, as an assumption, measurement time of each point of a laser scan point cloud is obtained.

As explained in the First Embodiment, the total station 200 includes a clock, and based on measurement of position of the reflecting prism 102 by the total station 200, position and orientation of the camera 101 at a specific time can be calculated by the location processing and adjustment calculation.

Since relationship of position and orientation of the camera 101 and the laser scanner 103 are known, if position and orientation of the camera 101 in a coordinate system used at a specific time are obvious, position and orientation of the laser scanner 103 in the coordinate system at the time can be calculated.

According to this, coordinates of each point of the laser scan point cloud (the second point cloud data) obtained by the laser scanner 103 can be transformed from the local coordinate system for which the origin point is the laser scanner 103 into the coordinate system which the total station 200 uses, and the second point cloud data can be described in the coordinate system which the total station 200 uses.

In this way, the first point cloud data and the second point cloud data can be handled in the same coordinate system, so the first point cloud data and the second point cloud data can be made consistent. The processing regarding the second point cloud data explained above is performed in the point cloud data processing unit 317.

As a method to calculate orientation of the laser scanner 103 regarding point obtained by the laser scanner 103, there are a method using IMU (inertia measuring units) and a method used together with IMU.

A construction is also possible in which a 3D-model based on the first point cloud data and a 3D model based on the second point cloud data are made consistent.

It is also possible that the content of work by the heavy equipment 100 is specified using the consistent 3D data (based on a point cloud or based on a three-dimensional model) shown in the present embodiment.

5. Fifth Embodiment

For example, feature points are extracted from photographed image 1 and photographed image 2, and using a point that is the same among them in which correspondence in each image is obvious, a mutual orientation is performed. In addition, in a case in which correspondence cannot be obtained in a certain area in spite of photographing being repeated before or after photographing the same area, such area is identified as an area in which ground form changed and feature points thereof are updated. That is, feature points of an object which changed are extracted. This processing is performed between photographed images which are in line along the time axis.

## 6. Sixth Embodiment

The feature point is synchronized with a time at which an image is photographed so that the feature point can have time information. Then, the feature points together with time information are made into a database, the newest feature points at a time which may be a trigger are collected, and location calculation is performed, so that ground form at the time can be obtained.

If an image and feature points at a necessary time are obtained, 3D ground form at that time can be replicated by using minimum required images during post-processing. By making models in this way at small intervals, such as every 30 minutes, changes in ground form can be observed in time series.

For example, a photographed image and feature points at time t1=13:00:00 and a photographed image and feature points at time t2=13:15:00 are obtained. Here, coordinates of feature points at each time can be calculated by using an earlier image and a later image.

In this way, 3D data of a photographed object at the time t1 can be understood by feature points, and 3D data of the photographed object at the time t2 can be understood by feature points. Then, by comparing two 3D data, changes in ground form which are generated between the time t1 and t2 can be known. In this case, it is not always necessary to make a 3D model, and processing can be efficient.

## 7. Seventh Embodiment

By installing a GNSS position measuring device on the heavy equipment, position of the camera on the heavy equipment can be specified by using this GNSS position measuring device. In this case, the reflecting prism and the total station is unnecessary (of course, they can be used together). Error is contained in measurement of position using GNSS, and the error in GNSS can be reduced by adjustment calculation. In the adjustment calculation, calculation is performed on the assumption that an antenna of the GNSS position measuring device is arranged at a position of the reflecting prism in the above-mentioned case. Furthermore, by using a relative positioning such as a RTK method, measurement error can be reduced. Handling of feature points, kinds of location, and other processing of data are the same as for other Embodiments.

## 8. Other Matters

The present invention can be applied to arrangement or construction of a building or object subjected to work using heavy equipment and demolishing of a building or object subjected to work using heavy equipment.

Explanation of Reference Numerals

100: Heavy equipment, 101: camera, 102: reflecting prism, 103: laser scanner, 120: base unit, 151: arm, 152: bucket, 200: total station, 401: mound of ground form, 402: mound of ground form.

## Claims

1.  An operating device comprising:

    a measurement data receiving unit which receives measurement data of which a measuring device, of which position and orientation in a specific coordinate system are known, tracks and measures positions of a reflecting prism for heavy equipment on which a camera and the reflecting prism are installed,
    an image data obtaining unit which obtains image data of multiple photographed images which are photographed by the camera from mutually different multiple positions during travel of the heavy equipment, and
    an operating unit which calculates relationship of relative position between multiple feature points common in the multiple photographed images and the mutually different multiple positions of the camera, and which specifies position of the multiple feature points in the specific coordinate system based on comparison between the mutually different multiple positions of the camera and the measurement data.

2.  The operating device according to claim 1,

wherein adjustment calculation of a position of the multiple feature points in the specific coordinate system is performed by using a relationship of a position between the camera and the reflecting prism.

3. The operating device according to claim 1 or 2,
   wherein the operating unit produces a first 3D data at a previous step on a time axis and produces a second 3D data at a later step on the time axis based on the multiple feature points, and performs processing calculating differences between the second 3D data and the first 3D data.

4. The operating device according to claim 3, further comprising a work content specifying unit which specifies content of work which is performed by the heavy equipment, based on the differences between the second 3D data and the first 3D data.

5. The operating device according to claim 3 or 4, further comprising an object of surveillance detecting unit which detects an object which moves toward the heavy equipment on the ground as an object of surveillance, based on the difference of the second 3D data and the first 3D data.

6. The operating device according to claim 5, further comprising an alerting unit which performs alerting processing in a case in which the object of surveillance approaches the heavy equipment within a predetermined distance.

7. The operating device according to any one of claims 1 to 6,

   wherein a part of the heavy equipment shows up in the multiple photographed images, and
   the device further comprises an eliminating unit which eliminates an image of part of the heavy equipment which shows up in multiple photographed images or 3D data corresponding to the image.

8. The operating device according to any one of claims 2 to 7,

   wherein a laser scanner is installed on the heavy equipment,
   relationships of position and orientation between the laser scanner and the camera is known,
   the laser scanner obtains laser scan point cloud during operation of the heavy equipment,
   position and orientation of the camera in the specific coordinate system is calculated by the adjustment calculation, and
   the device further comprises an operating unit which calculates position and orientation of the laser scanner in the specific coordinate system based on the position and the orientation of the camera in the specific coordinate system, and executes coordinate transformation of the laser scan point cloud into the specific coordinate system based on the position and the orientation of the laser scanner in the specific coordinate system.

9. An operating method comprising:

   receiving measurement data of which a measuring device, of which external orientation parameters in a specific coordinate system are known, tracks and measures the position of a reflecting prism for heavy equipment on which a camera and the reflecting prism are installed,
   obtaining image data of multiple photographed images which are photographed by the camera from mutually different multiple positions during travel of the heavy equipment,
   calculating a relationship of a relative position between multiple feature points common in the multiple photographed images and the mutually different multiple positions of the camera, and
   specifying a position of the multiple feature points in the specific coordinate system based on comparison between the mutually different multiple positions of the camera and the measurement data.

10. A program made to, when read and executed by a computer processor, cause the computer processor to:

   receive measurement data of which a measuring device, of which position and orientation in a specific coordinate system are known, tracks and measures a position of a reflecting prism for heavy equipment on which a camera and the reflecting prism are installed,
   obtain image data of multiple photographed images which are photographed by the camera from mutually different multiple positions during travel of the heavy equipment,
   calculate a relationship of relative position between the multiple feature points common in the multiple photographed images and the mutually different multiple positions of the camera, and

specify position of the multiple feature points in the specific coordinate system based on comparison between the mutually different multiple positions of the camera and the measurement data.

11. An operating device comprising:

a measurement data receiving unit, which receives measurement data of which the position of heavy equipment on which a camera and a GNSS position measuring device are installed, is measured by the GNSS device, an image data obtaining unit which obtains image data of multiple photographed images which are photographed by the camera from mutually different multiple positions during travel of the heavy equipment, and an operating unit which calculates a relationship of relative position between the multiple feature points common in the multiple photographed images and the mutually different multiple positions of the camera, and which specifies position of the multiple feature points based on a comparison between the mutually different multiple positions of the camera and the measurement data.

12. The operating device according to claim 11, wherein the operating unit produces a first 3D data at a previous step on a time axis and produces second 3D data at a later step on the time axis based on the multiple feature points, and performs processing calculating differences between the second 3D data and the first 3D data.

13. The operating device according to claim 12, further comprising a work content specifying unit which specifies content of work which is performed by the heavy equipment, based on the differences between the second 3D data and the first 3D data.

# Fig. 1

300 (Operating device)

151 101 102 103

110

100 (Heavy equipment)

111 112

152

120

200 (Total station)

# Fig. 2

p 3
p 2
p 1

101
102

101
102

100
(Heavy equipment)

Position 2

Position 1

200

Fig. 3

(A) Time t1

402    401    100

(B) Time t2

402    100

Fig. 4

(A)

401

402

(B)

401

402

# Fig. 5

| Operating device | 300 |

- Image data obtaining unit — 301
- Unnecessary data eliminating unit — 302
- Positioning data obtaining unit — 303
- Running condition obtaining unit — 304
- Feature point extracting unit — 305
- Corresponding point specifying unit — 306
- Location calculating unit — 307
- Adjustment calculating unit — 308
- Point cloud data obtaining unit — 309
- Change detecting unit — 310
- 3D model making unit — 311
- Data storing unit — 312
- Work content specifying unit — 313
- Object of surveillance specifying unit — 314
- Alerting unit — 315
- Camera controlling unit — 316
- Point cloud data processing unit — 317

# Fig. 6

```
        ┌─────────────────────┐
        │   Start processing  │
        └─────────────────────┘
                  │
   ┌──────────────▼──────────────┐
   │  ┌───────────────────────┐  │
   │  │  Obtaining image data │──┼── S101
   │  └───────────────────────┘  │
   │             │               │
   │  ┌──────────▼────────────────┐
   │  │ Eliminating unnecessary   │── S102
   │  │      image data           │
   │  └───────────────────────────┘
   │             │
   │  ┌──────────▼────────────┐
   │  │ Obtaining positioning │── S103
   │  │        data           │
   │  └───────────────────────┘
   │             │
   │  ┌──────────▼────────────┐
   │  │  Location calculating │── S104
   │  └───────────────────────┘
   │             │
   │  ┌──────────▼─────────────┐
   │  │ Adjustment calculating │── S105
   │  └────────────────────────┘
   │             │
   │  ┌──────────▼─────────────┐
   │  │ Obtaining point cloud  │── S106
   │  │        data            │
   │  └────────────────────────┘
   │             │
   │  ┌──────────▼──────────────────┐
   │  │ Detecting point cloud data  │── S107
   │  │        changed              │
   │  └─────────────────────────────┘
   │             │
   │  ┌──────────▼───────────────────────────┐
   └──│ Detecting point cloud data regarding  │── S108
      │          work content                 │
      └───────────────────────────────────────┘
```

# Fig. 7

```
        ┌─────────────────────┐
        │   Start processing  │
        └─────────────────────┘
                  │
   ┌──────────────▼──────────────┐
   │  ┌───────────────────────┐  │
   │  │ Obtaining point cloud │──┼── S201
   │  │        data           │  │
   │  └───────────────────────┘  │
   │             │               │
   │  ┌──────────▼──────────────┐ │
   │  │ Specifying object of    │── S202
   │  │     surveillance        │ │
   │  └─────────────────────────┘ │
   │             │               │
   │       NO  ╱─▼─╲             │
   │  ◄────────┤Condition├───── S203
   │           ╲to alert?╱       │
   │             ╲─┬─╱           │
   │            YES │            │
   │  ┌─────────────▼──────────┐ │
   │  │  Alerting processing   │── S204
   │  └────────────────────────┘ │
   │             │               │
   └─────────────┴───────────────┘
```

# Fig. 8

## INTERNATIONAL SEARCH REPORT

| International application No. |
| --- |
| **PCT/JP2023/028348** |

| A. | CLASSIFICATION OF SUBJECT MATTER |
| --- | --- |

*G01C 15/00*(2006.01)i; *E02F 9/20*(2006.01)i
FI:   G01C15/00 104C; G01C15/00 103A; E02F9/20 N; G01C15/00 102C

According to International Patent Classification (IPC) or to both national classification and IPC

| B. | FIELDS SEARCHED |
| --- | --- |

Minimum documentation searched (classification system followed by classification symbols)

G01C15/00; E02F9/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 11-211473 A (KOMATSU LTD.) 06 August 1999 (1999-08-06)<br>    paragraphs [0001], [0012]-[0043], [0051]-[0056], fig. 1-11 | 11-13 |
| Y | paragraphs [0001], [0012]-[0043], [0051]-[0056], fig. 1-11 | 1-4, 7-10 |
| Y | JP 2012-251774 A (TOKYU CONSTRUCTION CO., LTD.) 20 December 2012 (2012-12-20)<br>    paragraphs [0001], [0022]-[0041], [0049], fig. 1-4, 8 | 1-4, 7-10 |
| Y | JP 2022-046013 A (SHIMIZU CORP.) 23 March 2022 (2022-03-23)<br>    paragraphs [0018]-[0029], fig. 1-3 | 1-4, 7-10 |
| Y | JP 2016-008484 A (SUMITOMO (SHI) CONSTRUCTION MACHINERY CO., LTD.) 18 January 2016 (2016-01-18)<br>    paragraphs [0001], [0023] | 7, 8 |
| A | JP 2019-045425 A (TOPCON CORP.) 22 March 2019 (2019-03-22)<br>    entire text, all drawings | 1-13 |
| A | US 2016/0253808 A1 (HEXAGON TECHNOLOGY CENTER GMBH) 01 September 2016 (2016-09-01)<br>    whole document | 1-13 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 October 2023** | **24 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/028348**

| Patent document cited in search report | | | Publication date (day/month/year) | Patent family member(s) | | Publication date (day/month/year) |
|---|---|---|---|---|---|---|
| JP | 11-211473 | A | 06 August 1999 | US 6201883 B1 column 1, lines 4-7, column 2, line 66 to column 6, line 50, column 7, line 48 to column 8, line 25, fig. 1-11 | | |
| JP | 2012-251774 | A | 20 December 2012 | (Family: none) | | |
| JP | 2022-046013 | A | 23 March 2022 | (Family: none) | | |
| JP | 2016-008484 | A | 18 January 2016 | (Family: none) | | |
| JP | 2019-045425 | A | 22 March 2019 | US 2019/0073794 A1 whole document EP 3454008 A1 CN 109461190 A | | |
| US | 2016/0253808 | A1 | 01 September 2016 | EP 3062066 A1 whole document CN 105928498 A | | |

Form PCT/ISA/210 (patent family annex) (January 2015)

24

**EP 4 589 251 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEISEI08199643093 A
- JP 2013186816 A
- WO 2011070927 A
- JP 2012230594 A
- JP 2014035702 A